# EUROPEAN PATENT SPECIFICATION

(11) **EP 3 396 167 B1**
(45) Date of publication and mention of the grant of the patent: **16.09.2026**
(21) Application number: 18168872.2
(22) Date of filing: 24.04.2018
(51) Int. Cl.: F04D 13/06, F04D 29/42

(54) **FLUID CIRCULATOR WITH DISPLAY**
FLÜSSIGKEITSZIRKULATOR MIT ANZEIGE
CIRCULATEUR DE FLUIDE COMPORTANT UN ÉCRAN

(30) Priority: 27.04.2017 IT 201700045778
(43) Date of publication of application: 31.10.2018
(73) Proprietor: TACO ITALIA S.r.l., 36066 Sandrigo (VI) (IT)
(72) Inventor: SALVI, Stefano, 36100 Vicenza (IT)
(74) Representative: Botti & Ferrari S.p.A.

(56) References cited:
- EP-A1- 2 589 817
- US-B2- 8 721 306
- US-B2- 9 429 164

## Description

### Technical field

The present invention relates to a fluid circulator, particularly a fluid circulator for heating or cooling systems, comprising a display.

In general, the present invention is applicable in the field of pumps for the movement of fluids, wherein an impeller is coupled and set in motion by an electric motor.

### Prior art

Centrifugal motor-driven pumps, generally known under the name of "circulators", are employed for the circulation of a carrier fluid in the context of heating and/or cooling systems.

As it is known, a circulator generally comprises a synchronous electric motor, whose rotor is splined on a shaft coupled with an impeller of a pump, which is thus operated by the electric motor itself and which provides head to the fluid. Known circulators can have different configurations for the impeller, depending on the fluid being treated and on the head to be provided. For example, a known configuration provides a curved-blade impeller, of the centrifugal type.

Circulators are often used in heating and/or cooling systems, forming functional elements thereof.

It is thus desirable to determine the operating parameters of a circulator, by means of suitable sensors which characterize the operation thereof, particularly determining information concerning the flow rate, the pressure, the electrical power consumption, the temperature, etc., which are provided to a user/operator.

Circulators are known, wherein a control box determines the flow rate and pressure of the fluid being moved, and a user interface shows on a display an output representing the parameter being measured.

An example of circulator known from the document US2010189572A1 includes a control module comprising a control box, and further includes a user interface, electrically connected to the control box, comprising a display and input buttons. In the circulator known from US2010189572A1 a dedicated user interface is therefore provided, electrically connected to the control module but which is a component actually separated therefrom. Therefore, in the circulator known from US2010189572A1 an additional element is implied, i.e. the dedicated user interface, which involves an increase in the circulator construction complexity, and also an additional cost.

Document EP2589817A1 relates to a pump device having a housing unit which is made from a plastic, at which an electrical operating element or display element is arranged.

Document US9429164B2 relates to a rotor for a canned motor of a wet-running centrifugal pump, wherein the can is formed of plastic manufactured by way of injection molding.

Document US 8721306B2 describes a fluid circulator according to the preamble of claim 1.

An object of the present invention is to obviate to prior art drawbacks. A particular object of the present invention is to provide a circulator provided with a display that allows operating parameters to be immediately displayed.

A further particular object of the present invention is to provide a circulator equipped with a display which has a rational construction, in an assembly including also the display.

A further particular object of the present invention is to provide a circulator equipped with a display which is sturdy and suitable for use in the working conditions involving the presence of liquids which could damage the electronic components.

A further particular object of the present invention is to provide a circulator equipped with a display allowing the interaction with a user interface to adjust circulator operating parameters or displaying modes of the display.

These and other objects are achieved by a fluid circulator as it appears from the attached claims, which form an integral part of the present description.

### Summary of the invention

An idea underlying the present invention is to provide a fluid circulator comprising: a pump body with an impeller for movement of the fluid; a motor body with an electric motor for setting the impeller into rotation; a terminal box associated to the motor body and containing one electronic board for the control of the circulator, wherein the terminal box element comprises a cover element as closure. The electronic board comprises a display, particularly integrated on board, suitable for displaying at least one operation indication of the circulator, and the cover element is entirely made of transparent material as a single piece, to allow the display to be viewed from the outside of the terminal box. The cover element comprises a portion made of transparent material having a first transparency, providing a window to the display, and further comprises a second portion made of partially transparent material having a second transparency.

A circulator equipped with a display for displaying operating parameters is thereby produced.

Advantageously, the cover element of transparent material allows the display to be viewed, without requiring construction complexities and equipping the circulator with a rational construction. As a matter of fact, that cover element of transparent material can be associated to the terminal box and to the circulator motor body with full functionality.

Advantageously, the cover element made of transparent material allows a higher sturdiness to be achieved compared with traditional solutions, so that the terminal box remains particularly watertight and waterproof, being more suitable for use in the typical circulator working conditions, in contact with liquids and in wet environments.

Further features and advantages will be more apparent from the following detailed description, and from the dependent claims which outline preferred and particularly advantageous embodiments of the invention.

### Brief description of the drawings

The invention is shown with reference to the following figures, given by way of examples, wherein:
- Figure 1 shows a perspective view of a circulator.
- Figure 2 shows a sectional view of the circulator of Figure 1.
- Figure 3 shows a perspective view of the components of the circulator of Figure 1, in an exploded configuration.
- Figure 4 shows a further perspective view of the circulator of Figure 1.

In the different figures, similar elements will be identified by similar reference numbers.

### Detailed description

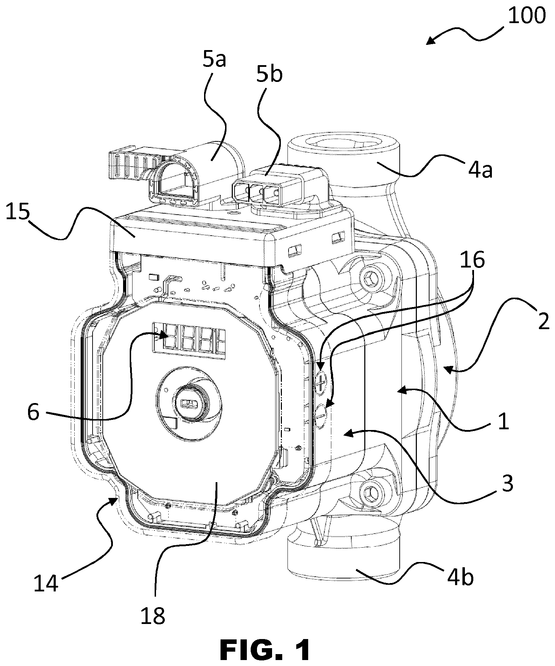

The example of Figure 1 schematically represents a circulator 100 made according to the present invention.

The circulator 100 can be also defined as a motor-driven pump, intended for the movement of fluid particularly in heating and/or cooling systems.

In its general configuration, the circulator 100 comprises a motor body 1 and a pump body 2, associated to one another to make the movement of fluid.

The motor body 1 comprises therewithin an electric motor (not visible in the figure). The pump body 2 comprises therewithin an impeller (not visible in the figure) set into rotation by the electric motor. The pump body 2 comprises an outlet flange 4a and an inlet flange 4b, for the fluid connection to a piping system, which the circulator 100 is connected to and within which the fluid to be moved flows.

The circulator 100 further comprises a terminal box 3 associated to the motor body 1. That terminal box 3 is preferably positioned opposite to the pump body 2.

The circulator 100 further comprises a plurality of connectors 5a and 5b of the electric or electronic type, which are connected to one electronic board (not visible in the figure) contained by the terminal box 3. That electronic board is responsible for controlling the operation of the circulator 100, particularly for controlling the electric motor power supply.

In general, the terminal box 3 houses therewithin, in addition to the electronic board, also a plurality of electric and electronic devices for powering and controlling the electric motor.

The electronic board comprises a display 6 which is suitable for displaying at least one operation indication of the circulator 100, in particular depending on information worked out by a processor of the electronic board. In particular, the display 6 is positioned "on board", i.e. integrated and directly connected thereon, without the presence of external connecting elements such as cables or patch cords.

The display 6 is visible from the outside of the terminal box 3, as it is evident in the figure. The possibility to view the display 6 through the terminal box 3 is given by an element made of transparent material constituting at least one part of the terminal box 3, as it will be illustrated in detail herebelow.

In the present context, the term "transparent" indicates a material capable to be penetrated through the whole thickness thereof by the light, allowing objects placed beyond it to be viewed. The person skilled in the art will appreciate how there are different "transparent" gradations, depending on how the view is clear or partially obstructed. In any case, in the present context the term "transparent" is to be intended with regard to viewing the display through the terminal box, clearly enough for reading the display indication.

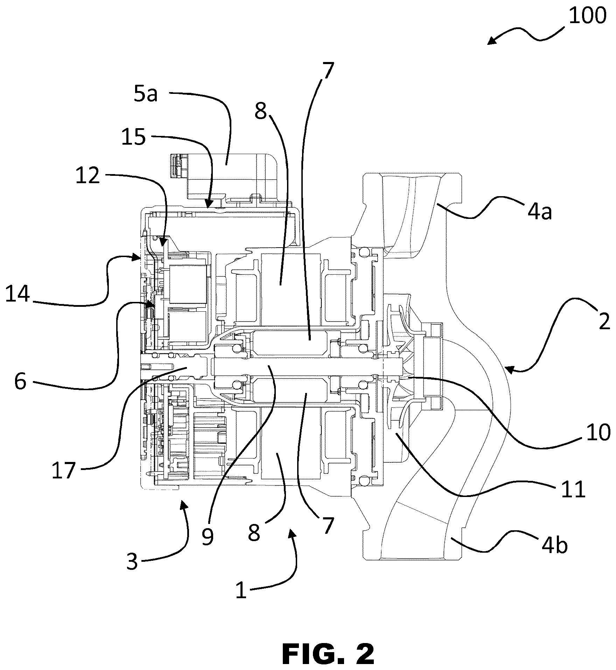

Figure 2 illustrates, in a sectional view, the main internal components of the circulator 100.

As mentioned, the motor body 1 houses therewithin an electric motor, preferably of the synchronous type. The electric motor is basically similar in the following components thereof: a permanent-magnet rotor 7 and a stator 8 with the relevant electric windings. The stator 8 is preferably of the type with four stator arms forming a configuration of two-phase electric motor, but other configurations can also be implemented, for example the single-phase one.

The motor body 1 further comprises a shaft 9 of the electric motor, whereon the rotor 7 is splined and kinematically coupled. The shaft 9 is therefore set into rotation by the electric motor.

The pump body 2 comprises an impeller 10 splined on the shaft 9 and therefore set into rotation by the electric motor. The impeller 10 is thus suitable to give a thrust to the fluid, being preferably an impeller of the centrifugal type, to provide a head i.e. an increase in pressure to the same.

The impeller 10 is housed in an accommodation volute 11, that embraces it in the pump body 2 and within which the fluid is during the circulator operation.

The motor shaft 9 passes through a wall separating the pump body 2 from the motor body 1, preferably through a hole sealed by a suitable gasket.

In general, the motor body 1 and the pump body 2 are separated from each other by a plurality of suitable gaskets, so as to form a waterproof motor body and a watertight volute 11, avoiding fluid seeping.

In general, the circulator 100 comprises suitable supports for the rotation of the motor shaft 9, such as for example rolling bearings and thrust-bearing elements suitable to support the thrusts occurring during the fluid circulation in the circulator.

The terminal box 3 houses an electronic board 12 and, preferably, other electric and electronic elements intended to power and control the electric motor, such as capacitors, switches, circuits, etc.

The terminal box 3 closes or completes the structure of the circulator 100, representing in particular an end of the circulator 100, associated to the motor body 1.

The electronic board 12 is electrically connected to the connectors 5a, 5b already described. Preferably, the electronic board 12 is further associated to a dissipation lamination, configured to keep the temperature of the electronic board 12 below a certain threshold, during operation.

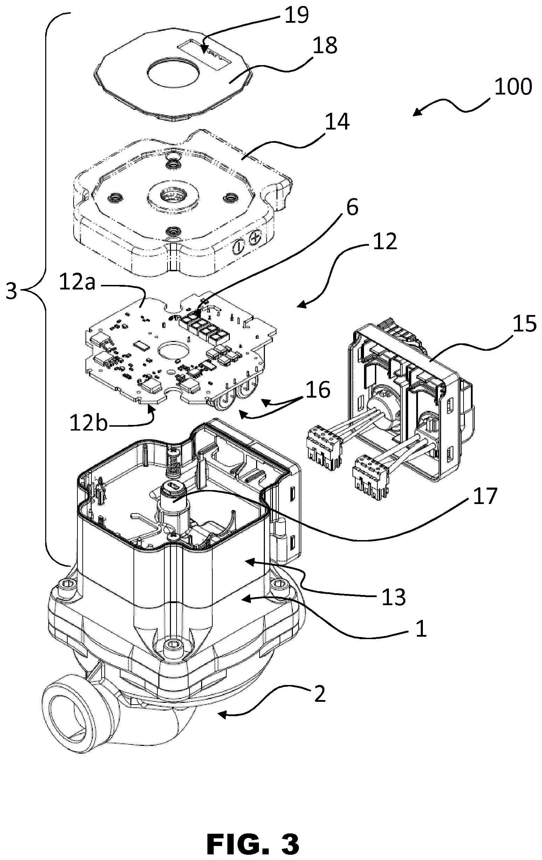

Figure 3 shows a perspective view of the circulator 100, in a disassembled or exploded configuration. In the configuration being represented, the motor body 1 and the pump body 2 are kept assembled, while the terminal box 3 is partially separated therefrom, split in some elements which will be now described.

The terminal box 3 comprises a coupling element 13, configured to couple with the motor body 1 through a coupling surface (not visible in the figure).

Preferably, the coupling surface of the terminal box 3 has a shape-coupling with the respective terminal surface of the motor body 1, so as to form a single body for the circulator 100, when assembled.

In particular, the peripheral dimension of the motor body 1, characterized by the side surface thereof, corresponds to a peripheral dimension of the terminal box 3, characterized by the side surface thereof; that correspondence at least between the coupling surface and the terminal surface causes the side walls of the terminal box 3 and of the motor body 1 to be, at least in correspondence with said coupling, aligned to each other once they are mounted. An uninterrupted alignment between the peripheral walls of the elements is thereby ensured.

The terminal box 3 comprises then the electronic board 12 already described. On the electronic board 12, the display 6 is positioned "on board", i.e. integrated and directly connected thereon, without the presence of external connecting elements such as cables or patch cords. The terminal box 3 comprises then a cover element 14 that closes the upper side of the terminal box 3. That cover element 14 is completely made of transparent material, to allow the display 6 to be viewed from the outside of the terminal box 3. The cover element 14 is made by molding a plastic material, particularly by injection molding. The cover element 14 is made as a single piece.

According to the invention, the portion at the display 6 of the cover element 14 is made of transparent material having a first transparency, as a window; the remaining portion of the cover element 14 is made of partially transparent material having a second transparency, i.e. capable to let the light penetrate but capable to allow only a partial-view therethrough. In other words, the cover element 14 is made in the window at the display 6 of a transparent material (such as transparent polycarbonate, light or preferably dark in color), while the remaining part of the cover element is made of the same material, as a single piece, preferably with "satin" or "partially opaque" finish to give a partial view effect of the electronic board, giving to the circulator a technological appearance which is pleasant for the user.

In the terminal box 3, the cover element 14 is in an opposite position to the coupling surface of the coupling element 13 already described, i.e. facing outwards of the terminal box. As it will be further appreciated, the display 6 is thereby exposed and thus visible to the user, allowing an effective and immediate reading thereof.

Within the terminal box 3, the electronic board 12 is substantially flat and comprises a first upper face 12a facing outwards of the circulator 100, and a second face 12b (hidden in the figure) facing the motor body 1. As visible in the figure, the display 6 is made on the first face 12a, so as to be exposed.

The terminal box 3 further comprises a closing side element 15, which comprises the electric and electronic connections for the electronic board 14. That side element is merely an illustrative example, and the person skilled in the art could conceive different alternatives thereof.

The terminal box 3, in particular due to the presence of the elements 13, 14 and 15 described here, is therefore closed. Preferably, the terminal box 3 is watertight, or at least waterproof, so as to prevent unintentional liquid penetrations therewithin, which risk to jeopardize the functionality thereof.

The terminal box 3 preferably comprises at least one button for the control of the circulator, such as the buttons 16.

The buttons 16 are obtained in a side zone of the terminal box 3, particularly being provided at a side edge of the cover element 14. Those buttons 16 are connected to the electronic board 12 to control a circulator operation.

Typically, the buttons 16 are used to vary and set the motor rotation speed, whose value is preferably indicated on the display 6.

The buttons 16 could be used for further control functions of the circulator 100, for example to provide different displaying modes on the display 6.

In general, the terminal box 3 is preferably mounted in an axial manner with respect to the shaft 9, on the motor body 1. In general, the terminal box 3 is preferably in a distal position with respect to the pump body 2; in other words, the terminal surface which the terminal box 3 is associated to is in a distal position with respect to the pump body 2, which is on the other side of the motor body 1.

Preferably, the terminal box 3 comprises a cylindrical housing defining an internal cavity. The shaft 9 of the electric motor placed within the motor body 1 is associated to a terminal element 17 of plastic material at the end facing the terminal box 3.

The cylindrical housing just defines a cavity configured to axially house the terminal element 17. The terminal element 17 corresponds to a plug, removably associated to the shaft.

The plug 17 is equipped with a notch for inserting a manoeuvring tool and mounted interposing seal gaskets. The plug 17 is housed in a cylindrical housing obtained in the terminal box 3; being the electric motor always in the vicinity of the circulation fluid (typically water), calcareous deposits and impurities can form, which can cause some difficulties in the motor starting phase, mainly in case of a restart after an inactivity phase. For this reason, in the maintenance phase, a direct intervention on the shaft 9 by an operator is required, by means of a manoeuvring tool, manually and forcibly causing a rotation of the shaft and the disjunction and the subsequent removal of those impurity deposits.

That action is possible just due to the presence of the removable plug 17, at the open end of the case containing the rotor splined on the shaft, after whose disassembly there is, in fact, a direct contact between internal members and external manoeuvring tool.

The transparent material of the cover element 14 comprises in fact a through aperture, i.e. a central hole, for accessing the plug 17, also from the outside of the circulator.

On the wall of the terminal box 3 at the cover element 14, holes are preferably made wherein it is possible to insert fixation means such as one or more screws for fixing of the cover 14 on the terminal box 3. Advantageously, those fixation means are accessible and operable by the portion of the circulator 100 at the terminal box 3, which is opposite to the pump body 2 connected to the hydraulic circuit. Fixation means are thereby more easily operable by the user even when the circulator 100 is installed in a working position.

The circulator 100 further comprises a cover insert 18. Preferably, that cover insert 18 has a flat shape; otherwise it could have different shapes.

Such cover insert 18 is configured to be applied on the terminal box 3, in particular on the face covered by the cover element 14. That cover insert 18 is optional, and it has primarily an aesthetic value. Moreover the cover insert 18 can be used to put labels or distinctive marks.

Moreover, that cover insert 18 hides the screw holes from view, but it carries a central hole to access the through aperture wherein the plug 17 is housed; in an alternative, that central hole could be absent, and the plug 17 accessible by simply removing the cover insert 18.

Preferably, the cover insert 18 comprises a window 19, made at the display 6 to allow it to be viewed through the cover element 14 of transparent material.

In a variant (not represented), also the cover insert 18 could be made of transparent material, or of a combination of transparent and/or semitransparent material, preferably similarly to the cover element 14. In any case, the cover insert 18, if optionally present, is configured to allow the display 6 to be viewed from the outside of the terminal box 3.

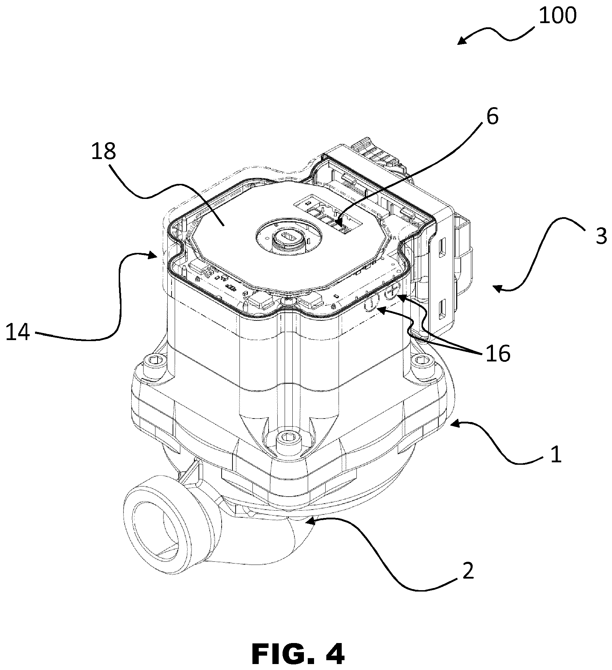

Figure 4 shows a further perspective view of the circulator 100.

In this view it can be appreciated how the cover element 14 defines a portion made of transparent material, through which the display 6 inserted within the terminal box 3 is visible from the outside.

The display 6 can indicate operating parameters of the circulator 100 and diagnostic information of the hydraulic circuit which it is associated to. In particular, the display 6 is visible to the user through the transparent portion, allowing an effective and immediate reading thereof.

In view of the description quoted here, the person skilled in the art will be able to formulate further modifications and alternatives, in order to meet contingent and specific requirements.

The here-described examples are therefore to be intended as merely illustrative of the invention, the scope of which is defined by the appended claims.

## Claims

1. Fluid circulator (100), comprising:
a pump body (2) comprising an impeller (10) for movement of said fluid;
a motor body (1) comprising an electric motor (7, 8, 9) for setting said impeller (8) into rotation;
a terminal box (3) associated to said motor body (1) and containing one electronic board (12) for the control of said circulator (100), said terminal box (3) comprising a cover element (14) for closing said terminal box (3);
said electronic board (12) comprises a display (6) suitable for displaying at least one operation indication of said circulator (100),
**characterized in that** said cover element (14) is entirely made as single piece of transparent material so as to view said display (6) from the outside of said terminal box (3),
wherein said cover element (14) comprises a portion made of transparent material having a first transparency, providing a window to said display (6), and further comprises a second portion made of partially transparent material having a second transparency.

2. Fluid circulator according to claim 1, wherein said terminal box (3) is closed and comprises a coupling surface configured to couple with said motor body (1) and wherein said cover element (14) is opposite to said coupling surface, being outwards of said terminal box (3).

3. Fluid circulator according to claim 1 or 2, wherein said cover element (14) is made by molding a transparent plastic material.

4. Fluid circulator according to any one of claims 1 to 3, wherein said electronic board (12) is substantially flat and comprises a first face (12a) facing outwards of said circulator (100), and a second face (12b) facing said motor body (1),
and wherein said display (6) is provided on said first face (12a) of said electronic board (12).

5. Fluid circulator according to any one of claims 1 to 4, further comprising at least one control button (16) for said circulator (100),
said at least one control button (6) being provided in a side zone of said cover element (14),
said at least one control button (16) being electronically connected to said electronic board (12) to control an operation of said circulator (100).

6. Fluid circulator according to any one of claims 1 to 5, wherein said terminal box (3) is watertight or waterproof.

7. Fluid circulator according to any one of claims 1 to 6,
wherein said electric motor (7, 8, 9) comprises a shaft (9),
and wherein said terminal box (3) is axially mounted on said motor body (1) with respect to said shaft (9),
and wherein said terminal box (3) further comprises a cylindrical housing, which defines a cavity configured to house a terminal element (17) axially associated in a removable manner to said shaft (9),
and wherein said cover element (14) comprises a through aperture for access to said terminal element (17).

8. Fluid circulator according to any one of claims 1 to 7, further comprising a cover insert (18) applied on said cover element (14),
said cover insert (18) being further configured to allow said display (6) to be viewed from the outside of said terminal box (3),
said cover insert (18) preferably comprising a central hole for access to a terminal element (17).

9. Fluid circulator according to any one of claims 1 to 8, wherein said display (6) is integrated and directly connected on said electronic board (12).

10. Fluid circulator according to any one of claims 1 to 9, further comprising, on a wall of said terminal box (3) at said cover element (14), holes for fixation means for fixing said cover element (14) on said terminal box (3).

## Patentansprüche

1. Flüssigkeitszirkulator (100), umfassend:
einen Pumpenkörper (2), der ein Laufrad (10) zum Bewegen der Flüssigkeit aufweist;
einen Motorkörper (1), der einen Elektromotor (7, 8, 9) zum Antreiben des Laufrads (8) aufweist;
einen Anschlusskasten (3), der dem Motorkörper (1) zugeordnet ist und eine Elektronikplatine (12) zur Steuerung des Flüssigkeitszirkulators (100) enthält, wobei der Anschlusskasten (3) ein Abdeckelement (14) zum Verschließen des Anschlusskastens (3) aufweist;
wobei die Elektronikplatine (12) eine Anzeige (6) umfasst, die dazu ausgebildet ist,
mindestens einer Betriebsanzeige des Zirkulators (100) anzuzeigen,
**dadurch gekennzeichnet, dass** das Abdeckelement (14) vollständig aus einem einzigen Stück transparenten Materials gefertigt ist, sodass die Anzeige (6) von der Außenseite des Anschlusskastens (3) aus sichtbar ist,
wobei das Abdeckelement (14) einen Abschnitt aus transparentem Material mit einer ersten Transparenz aufweist, wodurch ein Fenster zu der Anzeige (6) bereitgestellt wird, und ferner einen zweiten Abschnitt aus teilweise transparentem Material mit einer zweiten Transparenz aufweist.

2. Flüssigkeitszirkulator nach Anspruch 1, wobei der Anschlusskasten (3) geschlossen ist und eine Kupplungsfläche aufweist, die dazu ausgebildet ist, mit dem Motorkörper (1) gekoppelt zu werden, und wobei das Abdeckelement (14) gegenüber der Kupplungsfläche angeordnet ist und nach außen des Anschlusskastens (3) angeordnet ist.

3. Flüssigkeitszirkulator nach Anspruch 1 oder 2, wobei das Abdeckelement (14) durch Formen eines transparenten Kunststoffmaterials hergestellt ist.

4. Flüssigkeitszirkulator nach einem der Ansprüche 1 bis 3, wobei die Elektronikplatine (12) im Wesentlichen flach ist und eine erste, nach außen des Flüssigkeitszirkulators (100) gerichtete Seite (12a) sowie eine zweite, dem Motorkörper (1) zugewandte Seite (12b) aufweist,
und wobei die Anzeige (6) auf der ersten Seite (12a) der Elektronikplatine (12) vorgesehen ist.

5. Flüssigkeitszirkulator nach einem der Ansprüche 1 bis 4, der weiter mindestens eine Steuertaste (16) für den Flüssigkeitszirkulator (100) umfasst,
wobei die mindestens eine Steuertaste (16) in einem seitlichen Bereich des Abdeckelements (14) vorgesehen ist,
wobei die mindestens eine Steuertaste (16) mit der Elektronikplatine (12) elektronisch verbunden ist, um einen Betrieb des Zirkulators (100) zu steuern.

6. Flüssigkeitszirkulator nach einem der Ansprüche 1 bis 5, wobei der Anschlusskasten (3) wasserdicht oder wasserfest ist.

7. Flüssigkeitszirkulator nach einem der Ansprüche 1 bis 6,
wobei der Elektromotor (7, 8, 9) eine Welle (9) umfasst,
und wobei der Anschlusskasten (3) in Bezug auf die Welle (9) axial am Motorkörper (1) angebracht ist,
und wobei der Anschlusskasten (3) weiter ein zylindrisches Gehäuse umfasst, das einen Hohlraum bildet, der zur Aufnahme eines Anschlusselements (17) ausgebildet ist, das axial lösbar mit der Welle (9) verbunden ist,
und wobei das Abdeckelement (14) eine Durchgangsöffnung für den Zugang zum Anschlusselement (17) umfasst.

8. Flüssigkeitszirkulator nach einem der Ansprüche 1 bis 7, der weiter einen auf das Abdeckelement (14) aufgesetzten Abdeckungseinsatz (18) umfasst,
wobei der Abdeckungseinsatz (18) weiter so ausgebildet ist, dass er es ermöglicht, die Anzeige (6) von der Außenseite des Anschlusskastens (3) aus anzuschauen,
wobei der Abdeckungseinsatz (18) vorzugsweise ein zentrales Loch für den Zugang zu einem Anschlusselement (17) umfasst.

9. Flüssigkeitszirkulator nach einem der Ansprüche 1 bis 8, wobei die Anzeige (6) in der Elektronikplatine (12) integriert und direkt mit dieser verbunden ist.

10. Flüssigkeitszirkulator nach einem der Ansprüche 1 bis 9, der weiter, an einer Wand des Anschlusskastens (3) am Abdeckelement (14), Löcher für Befestigungsmittel zum Befestigen des Abdeckelements (14) am Anschlusskasten (3) aufweist.

## Revendications

1. Circulateur de fluide (100) comprenant :
un corps de pompe (2) comprenant un impulseur (10) pour le déplacement dudit fluide ;
un corps de moteur (1) comprenant un moteur électrique (7, 8, 9) pour régler ledit impulseur (8) en rotation ;
une boîte à bornes (3) associée audit corps de moteur (1) et contenant une carte électronique (12) pour la commande dudit circulateur (100), ladite boîte à bornes (3) comprenant un élément de couvercle (14) pour fermer ladite boîte à bornes (3) ;
ladite carte électronique (12) comprend un écran (6) approprié pour afficher au moins une indication de fonctionnement dudit circulateur (100),
**caractérisé en ce que** ledit élément de couvercle (14) est entièrement réalisé comme une pièce unique de matériau transparent afin d'observer ledit écran (6) à partir de l'extérieur de ladite boîte à bornes (3),
dans lequel ledit élément de couvercle (14) comprend une partie réalisée avec un matériau transparent présentant une première transparence, fournissant une fenêtre audit écran (6) et comprend en outre une deuxième partie réalisée avec un matériau partiellement transparent présentant une deuxième transparence.

2. Circulateur de fluide selon la revendication 1, dans lequel ladite boîte à bornes (3) est fermée et comprend une surface de couplage configurée pour se coupler avec ledit corps de moteur (1) et dans lequel ledit élément de couvercle (14) est opposé à ladite surface de couplage, étant à l'extérieur de ladite boîte à bornes (3).

3. Circulateur de fluide selon la revendication 1 ou 2, dans lequel ledit élément de couvercle (14) est réalisé en moulant une matière plastique transparente.

4. Circulateur de fluide selon l'une quelconque des revendications 1 à 3, dans lequel ladite carte électronique (12) est sensiblement plate et comprend une première face (12a) orientée vers l'extérieur dudit circulateur (100), et une deuxième face (12b) faisant face audit corps de moteur (1),
et dans lequel ledit écran (6) est prévu sur ladite première face (12a) de ladite carte électronique (12).

5. Circulateur de fluide selon l'une quelconque des revendications 1 à 4, comprenant en outre au moins un bouton de commande (16) pour ledit circulateur (100),
ledit au moins un bouton de commande (6) étant prévu dans une zone latérale dudit élément de couvercle (14),
ledit au moins un bouton de commande (16) étant raccordé, par voie électronique, à ladite carte électronique (12) pour commander un fonctionnement dudit circulateur (100).

6. Circulateur de fluide selon l'une quelconque des revendications 1 à 5, dans lequel ladite boîte à bornes (3) est étanche à l'eau ou imperméable à l'eau.

7. Circulateur de fluide selon l'une quelconque des revendications 1 à 6,
dans lequel ledit moteur électrique (7, 8, 9) comprend un arbre (9),
et dans lequel ladite boîte à bornes (3) est axialement montée sur ledit corps de moteur (1) par rapport audit arbre (9),
et dans lequel ladite boîte à bornes (3) comprend en outre un boîtier cylindrique, qui définit une cavité configurée pour loger un élément de borne (17) axialement associé, d'une manière amovible, audit arbre (9),
et dans lequel ledit élément de couvercle (14) comprend une ouverture débouchante pour avoir accès audit élément de borne (17).

8. Circulateur de fluide selon l'une quelconque des revendications 1 à 7, comprenant en outre un insert de couvercle (18) appliqué sur ledit élément de couvercle (14),
ledit insert de couvercle (18) étant en outre configuré pour permettre audit écran (6) d'être observé depuis l'extérieur de ladite boîte à bornes (3),
ledit insert de couvercle (18) comprenant de préférence un trou central pour avoir accès à un élément de borne (17).

9. Circulateur de fluide selon l'une quelconque des revendications 1 à 8, dans lequel ledit écran (6) est intégré et directement raccordé à ladite carte électronique (12).

10. Circulateur de fluide selon l'une quelconque des revendications 1 à 9, comprenant en outre, sur une paroi de ladite boîte à bornes (3) au niveau dudit élément de couvercle (14), des trous pour des moyens de fixation afin de fixer ledit élément de couvercle (14) sur ladite boîte à bornes (3).
